# EUROPEAN PATENT APPLICATION

(11) **EP 4 432 571 A1**
(43) Date of publication of application: **18.09.2024**
(21) Application number: 22913964.7
(22) Date of filing: 29.11.2022
(51) Int. Cl.: H04B 7/0426, H04B 17/19

(54) **ANTENNA DECOUPLING METHOD, ELECTRONIC DEVICE, AND COMPUTER-READABLE STORAGE MEDIUM**

(30) Priority: 29.12.2021 CN 202111646534
(71) Applicant: ZTE Corporation, Shenzhen, Guangdong 518057 (CN)
(72) Inventor: LI, Yuanyong, Shenzhen, Guangdong 518057 (CN)
(74) Representative: Canzler & Bergmeier Patentanwälte Partnerschaft mbB
(86) International application number: PCT/CN2022/135109
(87) International publication number: WO 2023/124708

(57) **Abstract**

Provided in the present disclosure are an antenna decoupling method, an electronic device, and a computer-readable storage medium. The method comprises: sending a first signal by means of a transmitting antenna; receiving a second signal by means of a receiving antenna; calculating a correlation coefficient between the transmitting antenna and the receiving antenna according to the first signal and the second signal; and adjusting the working states of the transmitting antenna and the receiving antenna according to the calculated correlation coefficient.

## Description

### CROSS-REFERENCE TO RELATED APPLICATIONS

The present disclosure claims the priority of Chinese Patent Application No. 202111646534.8, entitled "Antenna Decoupling Method, Electronic Device and Computer-Readable Storage Medium", filed on December 29, 2021, the contents of which are incorporated herein in their entirety by reference.

### TECHNICAL FIELD

The present disclosure relates to the field of communications, and in particular, to an antenna decoupling method, an electronic device, and a computer-readable storage medium.

### BACKGROUND

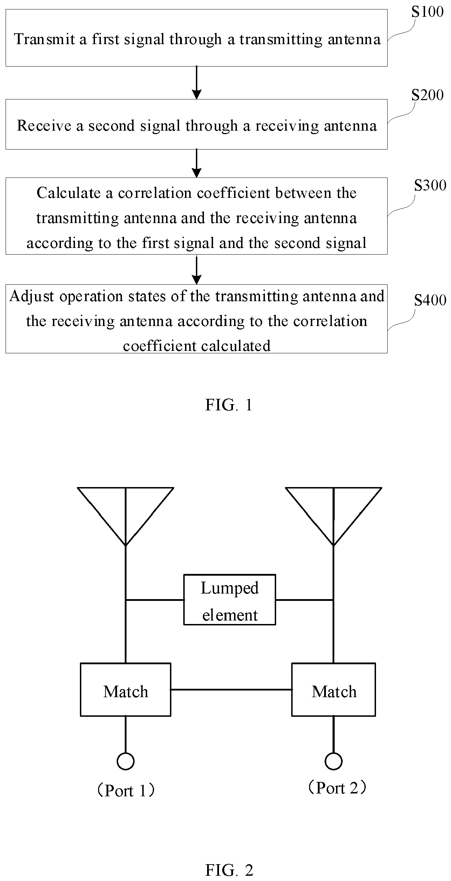

At present, in order to ensure that multiple antennas in a 5G terminal have a relatively low correlation coefficient, a manner of increasing a spacing between the antennas is generally adopted to improve isolation in space between the antennas, or a decoupling network is added for the antennas to achieve a purpose of decoupling to decrease the correlation coefficient. For example, as shown in Fig. 2, a lumped element is added between the antennas, and network matching (Match) is added at each port, so that the isolation in space between the antennas is improved, decoupling between the antennas is achieved, and the correlation coefficient between the antennas is reduced.

However, since the number of antennas of the 5G terminal becomes more and more increasingly at present, it is increasingly difficult to ensure a correlation by the isolation in space between the antennas.

### SUMMARY

The present disclosure provides an antenna decoupling method, an electronic device, and a computer-readable storage medium.

In a first aspect, the present disclosure provides an antenna decoupling method, applied to a mobile terminal, including: transmitting a first signal through a transmitting antenna; receiving a second signal through a receiving antenna; calculating a correlation coefficient between the transmitting antenna and the receiving antenna according to the first signal and the second signal; and adjusting operation states of the transmitting antenna and the receiving antenna according to the correlation coefficient calculated.

In a second aspect, the present disclosure provides an electronic device, including: at least one processor; a memory having at least one program stored thereon, the at least one program, executed by the at least one processor, causes the at least one processor to implement the antenna decoupling method described in the first aspect; at least one I/O interface connected between the processor and the memory and configured to enable information interaction between the processor and the memory.

In a third aspect, the present disclosure provides a computer-readable storage medium having a computer program stored thereon, the computer program, executed by the processor, causes the processor to implement the antenna decoupling method described in the first aspect.

### BRIEF DESCRIPTION OF DRAWINGS

Fig. 1 is a flowchart of an antenna decoupling method provided in embodiments of the present disclosure.
Fig. 2 is a schematic diagram of an implementation framework for reducing correlation coefficients between antennas in the existing art.
Fig. 3 is a schematic diagram of an implementation framework for implementing an antenna decoupling method provided in embodiments of the present disclosure.
Fig. 4 is a schematic diagram of an implementation framework for implementing an antenna decoupling method provided in embodiments of the present disclosure.
Fig. 5 is a schematic diagram of an electronic device provided in embodiments of the present disclosure.
Fig. 6 is a schematic diagram of a computer-readable storage medium provided in embodiments of the present disclosure.

### DETAIL DESCRIPTION OF EMBODIMENTS

The specific embodiments described herein are only used to illustrate the present disclosure and do not limit the present disclosure.

In following description, suffixes such as "module", "component", or "unit" used to indicate elements are used only for facilitating the explanation of the present disclosure, and have no peculiar meaning by themselves. Thus, terms "module", "component" or "unit" may be used mixedly.

In the existing art, the number of antennas in a 5G terminal is generally more than twelve, the isolation in space between the antennas cannot be improved in a limited space of the mobile terminal, and thus it is difficult to balance and ensure both the performance of the antennas and the isolation between the antennas. If a decoupling network is added between the antennas, a defective region is added on a Printed Circuit Board (PCB) or an electromagnetic band gap decoupling is adopted to solve a problem of a correlation between the antennas, there may be certain limitations when applied to the mobile terminal, for example, there may be strict expectations on a layout of the antennas and a layout of the PCB. Moreover, these manners cannot adjust a state of any antenna in real time, and in practical applications, changes in the state of the antenna in the mobile terminal cannot respond to any adjustment in real time to achieve a better state and achieve better performance.

In view of above, the present disclosure provides an intelligent antenna decoupling method, in which detections are performed reciprocally between antennas in each mobile terminal, and an operation state of each antenna can be adjusted in real time, so that the antennas have a relatively low correlation coefficient therebetween, thereby achieving a purpose of decoupling between the antennas, to meet expectations on MIMO performance of the mobile terminal, and achieve a purpose of optimizing a data throughput rate of the mobile terminal.

In a first aspect, embodiments of the present disclosure provide an antenna decoupling method, and as shown in Fig. 1, the method includes following operations: S 100, transmitting a first signal through a transmitting antenna; S200, receiving a second signal through a receiving antenna; S300, calculating a correlation coefficient between the transmitting antenna and the receiving antenna according to the first signal and the second signal; and S400, adjusting operation states of the transmitting antenna and the receiving antenna according to the correlation coefficient calculated.

In a mobile terminal, a transceiver may be generally regarded as a combination of a transmitter with a function of transmitting information and a receiver with a function of receiving information, and the number of transceivers with functions of receiving and transmitting information is often less than the number of antennas, and thus it is not necessary to bind the transceiver for each antenna. For testing with each antenna in the mobile terminal, through an antenna switch, the transmitter may be correspondingly connected to the transmitting antenna to transmit signals and the receiver may be connected to the receiving antenna to receive signals according to a testing expectation.

If a signal is to be transmitted, the antenna switch is adjusted, to connect the transmitter to an antenna which is currently used as the transmitting antenna, and each receiving antenna is connected to the receiver. The transmitter transmits a signal to the transmitting antenna, the transmitting antenna transmits the first signal out, and the receiving antenna receives the signal. Because the first signal is affected by factors such as attenuation and interference in a transmission process of the transmitting antenna transmitting the signal and a receiving process of the receiving antenna receiving the signal, an amplitude, a phase and the like of the signal are changed, although the receiving antenna is to receive the first signal, a signal changed from the first signal is actually received, and in order to distinguish the signal received by the receiving antenna from the first signal originally transmitted by the transmitting antenna, the signal actually received by the receiving antenna is referred to as the second signal in the present disclosure. That is, the transmitting antenna transmits the first signal, the receiving antenna actually receives the second signal, and the first signal and the second signal are different from each other. By comparing specific information of parameters of such two antennas and analyzing a difference between parameters of the two antennas, the correlation coefficient between the transmitting antenna and the receiving antenna can be calculated according to a formula for calculating the correlation coefficient.

The lower the correlation coefficient is, the better the MIMO performance is, therefore, in the present disclosure, the transmitted signal is to be transferred to the antenna as efficiently as possible, i.e., with maximum efficiency, by adjusting an operation state of each antenna through a tuning circuit, for example, by adding an antenna switch, adjusting a length of the antenna, adjusting a resistance or a capacitance, adjusting network matching, and the like, so that the correlation coefficient between the antennas is reduced.

The antenna decoupling method provided in the embodiments of the present disclosure can dynamically detect and adjust the antenna in real time, and is to be started in a plurality of modes, for example, the antenna decoupling method may be triggered in at least one of following situations: triggered at each power-up, manually triggered, regularly triggered, the correlation coefficient between the antennas being higher than a threshold value, or a data throughput rate being lower than a preset rate value, which are not listed here one by one.

The embodiments of the present disclosure require no additional space for isolation, and is not limited to decoupling between two antennas, but can entirely reduce the correlation coefficient between the antennas in a limited space for isolation by adjusting the operation states of the antennas, so that a purpose of decoupling between the antennas is achieved, and an effect of improving the data throughput rate is finally achieved.

In some implementations, the mobile terminal has m antennas, m is a positive integer greater than 1, and the m antennas are taken as the transmitting antenna one by one to sequentially perform the operation of transmitting the first signal through the transmitting antenna; the receiving antenna is any antenna except the transmitting antenna in the m antennas.

At present, the mobile terminal generally has a plurality of antennas, and thus a relationship of correlation coefficients between the antennas becomes complicated. The embodiments of the present disclosure sequentially take each of the m antennas (i.e., first to m^{th} antenna) as the transmitting antenna through a polling transmission mode, the transmitter is connected to each antenna successively by the antenna switch to transmit the first signal, all other antennas except the transmitting antenna are taken as receiving antennas to receive the second signal, and the correlation coefficient between the transmitting antenna and each receiving antenna is calculated according to the first signal and the second signal received by the receiving antenna.

In some implementations, the calculating a correlation coefficient between the transmitting antenna and the receiving antenna according to the first signal and the second signal includes: acquiring parameter information of the first signal and the second signal received by each receiving antenna; calculating the correlation coefficient between the transmitting antenna and the receiving antenna according to the parameter information.

In some implementations, the parameter information includes at least one of following information: signal amplitude, signal phase.

The parameter information of the first signal and the second signal, such as the signal amplitude, the signal phase, and the like, are acquired, the first signal and the second signal received by each receiving antenna are analyzed and compared, the correlation coefficient between the transmitting antenna and the receiving antenna is calculated through a preset formula for calculating the correlation coefficient.

In some implementations, the adjusting operation states of the transmitting antenna and the receiving antenna according to the correlation coefficient calculated includes: adjusting the operation states of the transmitting antenna and the receiving antenna through a tuning circuit; the tuning circuit adjusts at least one of followings: a length of any antenna, a resistance or capacitance, or antenna matching.

The operation states of the antennas may be adjusted in various modes, for example, by adding the antenna switch, adjusting the length of any antenna, adjusting a resistance or capacitance, adjusting the network matching, and the like, so that the transmitted signal is to be transferred to the antenna with maximum efficiency through the tuning circuit, and the correlation coefficient between the antennas is reduced.

The calculating a correlation coefficient between the transmitting antenna and the receiving antenna according to the first signal and the second signal further includes: obtaining an array of correlation coefficients between the m antennas according to the correlation coefficient between each transmitting antenna and each corresponding receiving antenna by successively taking each of the m antennas (i.e., first to m^{th} antenna) as the transmitting antenna.

Since the mobile terminal has a plurality of antennas, mutual influence is generated not only between every two antennas, but also each antenna is influenced by multiple antennas simultaneously, during adjusting the correlation coefficient between two antennas, the correlation coefficients between other antennas may be influenced. During adjusting the correlation coefficient, it cannot be considered that the correlation coefficient is desired or optimized only depending on that a part of the correlation coefficients are reduced, by contrast, the array of correlation coefficients is to be evaluated as a whole. The adjusting may be performed after all the antennas are polled, or may be performed during polling. It is possible that the overall evaluation is not improved after one time of adjusting is completed, if a part of the correlation coefficients become lower and another part of the correlation coefficients become greater, multiple times of adjusting may be expected to obtain a desired result.

In some implementations, the adjusting operation states of the transmitting antenna and the receiving antenna according to the correlation coefficient calculated includes: adjusting the correlation coefficient between the transmitting antenna and the receiving antenna through a tuning circuit to enable the adjusted correlation coefficient to be lower than the correlation coefficient not adjusted.

In some implementations, the adjusting operation states of the transmitting antenna and the receiving antenna according to the correlation coefficient calculated includes: adjusting the correlation coefficient between the transmitting antenna and the receiving antenna through a tuning circuit to enable the data throughput rate to be greater.

For the array of correlation coefficients, the antennas affect each other, and during adjusting the operation states of the antennas, if all the correlation coefficients in the array after the adjusting are lower than those before the adjusting, or if some of the correlation coefficients are not lower but equal to those before the adjusting, the correlation coefficients are lower as a whole. However, if a part of the correlation coefficients in the array become lower but another part of the correlation coefficients become greater, the correlation coefficients cannot be regarded as optimized only depending on the part of the correlation coefficients lower, and the array of correlation coefficients should be entirely evaluated as a whole. For example, an overall average value, a balance, and weights of important services may be comprehensively considered to obtain a comprehensive conclusion, so as to determine whether the adjusting achieves a purpose of optimizing according to the comprehensive conclusion.

Since a final purpose of adjusting the correlation coefficient is to increase the data throughput rate, whether the adjusting achieves the purpose of optmizing may be determined directly according to the final data throughput rate, and if the data throughput rate after the adjusting is greater than the data throughput rate before the adjusting, the adjusting is considered to have an effect of optimizing.

An operation process of the antenna decoupling method described in the first aspect of the present disclosure in the mobile terminal are described below in detail with reference to two examples.

### Example I

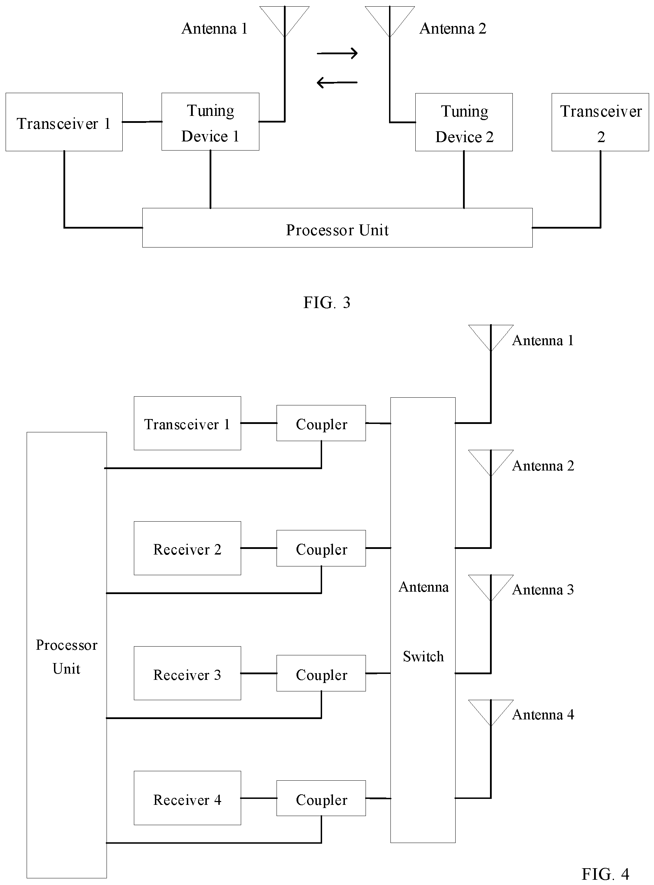

As shown in Fig. 3, in the mobile terminal, a transceiver 1 and an antenna 1 are responsible for transmitting a first signal, an antenna 2 and a transceiver 2 are responsible for receiving a second signal, and a processor unit may compare the first signal and the second signal to perform a calculation, and may further instruct a tuning device to adjust operating states of the antenna 1 and the antenna 2. The specific operation process is described as follows.

The transceiver 1 transmits the first signal through the antenna 1 to enable the first signal to be coupled to the antenna 2, since the first signal is affected by factors such as attenuation and interference, an amplitude, a phase and the like of the signal are changed, the signal actually received by the antenna 2 is a signal changed from the first signal, and in order to distinguish the signal received by the antenna 2 from the first signal originally transmitted by the transmitting antenna 1, the signal actually received by the receiving antenna 2 is referred to as the second signal. The antenna 2 transmits the second signal to the transceiver 2.

The processor unit compares information of amplitudes, phases and the like of the first signal transmitted by the transceiver 1 and the second signal received by the transceiver 2, to calculate the correlation coefficient between the two antennas according to a formula for calculating the correlation coefficient between the antennas.

The operation states of the antenna 1 and the antenna 2 are to be adjusted by controlling a tuning device 1 and a tuning device 2, so as to obtain a desired correlation coefficient between the antennas.

Similarly, the transceiver 2 may transmit the first signal through the antenna 2 to enable the first signal to be coupled to the antenna 1, the antenna 1 forwards the received signal to the transceiver 1, and then the correlation coefficient is to be calculated, and the antennas are adjusted, the process after roles of transceivers 1 and 2 are exchanged is the same as that before the roles of transceivers 1 and 2 are exchanged, and thus is not described herein.

### Example II

For a one-transmitting and multi-receiving radio frequency frame structure, a purpose of intelligent tuning-decoupling may be achieved through a transmission polling mode. A one-transmitting-four-receiving RF frame structure is illustrated below as an example, and as shown in Fig. 4, there are four antennas in the mobile terminal, the antennas do not correspond to transceivers one to one, a transceiver 1 and three receivers may be respectively connected to each antenna through an antenna switch, and a processor unit controls the distribution of power through a coupler.

The four antennas are polled through the antenna switch to perform a transmission, for example, the transceiver 1 is connected to an antenna 1 through the antenna switch and transmits a first signal through the antenna 1, and an antenna 2, an antenna 3 and an antenna 4 receive a second signal through coupling. In such case, the antenna 1 may also serve as a receiver, compare a received signal with the first signal, and analyze information such as amplitudes and phases of signals to calculate a correlation coefficient as a reference.

Similarly, through the antenna switch, the transceiver 1 may be switched to the antenna 2, the antenna 3 and the antenna 4 respectively, and through a polling transmission mode and respective calculations, an array of correlation coefficients between the four antennas can be calculated, the states of the antennas may changed by adjusting tuning devices prior to the antennas, so that the array of correlation coefficients between the antennas is adjusted and optimized in real time, a purpose of optimizing a data throughput rate of the mobile terminal is achieved. Positions of the tuning devices may be set as desired, and since many devices are shown in Fig. 4, not each of the tuning devices is shown for simplifying.

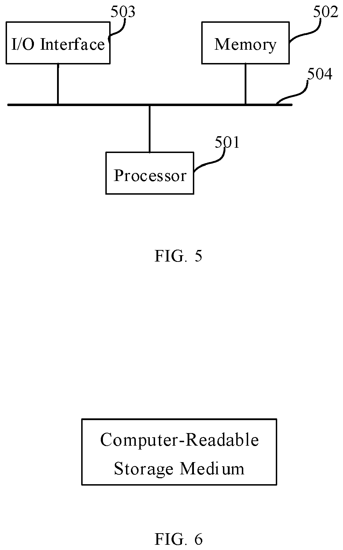

In a second aspect, embodiments of the present disclosure provide an electronic device, and as shown in Fig. 5, the electronic device includes: at least one processor 501; a memory 502 having at least one program stored thereon, the at least one program, executed by the at least one processor, causes the at least one processor to implement the antenna decoupling method described in the first aspect; at least one I/O interface 503 connected between the processor and the memory and configured to enable information interaction between the processor and the memory.

The processor 501 is a device having a capability of processing data, includes, but is not limited to, a Central Processing Unit (CPU), and the like; the memory 502 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface (read/write interface) 503 is connected between the processor 501 and the memory 502, enables to implement information interaction between the processor 501 and the memory 502, and includes, but is not limited to, a data Bus, and the like.

In some implementations, the processor 501, the memory 502, and the I/O interface 503 are connected together through a bus 504, and are further connected to other components of a computing device.

In a third aspect, embodiments of the present disclosure provide a computer-readable storage medium, and as shown in Fig. 6, the computer-readable storage medium having a computer program stored thereon, the computer program, executed by the processor, causes the processor to implement the antenna decoupling method described in the first aspect.

In the intelligent antenna decoupling method provided in the present disclosure, through mutual detections between antennas and real-time adjustments on the antennas in each mobile terminal, the antennas have lower correlation coefficients therebetween, so that the expectation on the MIMO performance of the mobile terminal is met, and the purpose of optimizing the data throughput rate of the mobile terminal is achieved.

It should be understood by those of ordinary skill in the art that all or some of the operations in the method, the functional modules/components in the system or apparatus described above may be implemented as software, firmware, hardware, or suitable combinations thereof.

In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). It should be known by those of ordinary skill in the art that the computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store any desired information and can be accessed by a computer. In addition, it should be known by those of ordinary skill in the art that the communication medium generally includes computer-readable instructions, data structures, program modules or other data in a modulated data signal, such as a carrier wave or other transmission mechanism, and may include any information delivery medium.

The exemplary embodiments and implementations of the present disclosure are described above with reference to the accompanying drawings, but are not intended to limit the scope claimed by the present disclosure. Any modifications, equivalents, and improvements made by those skilled in the art without departing from the scope and essence of the present disclosure are intended to be within the scope claimed by the present disclosure.

## Claims

1. An antenna decoupling method, applied to a mobile terminal, comprising:
transmitting a first signal through a transmitting antenna;
receiving a second signal through a receiving antenna;
calculating a correlation coefficient between the transmitting antenna and the receiving antenna according to the first signal and the second signal;
adjusting operation states of the transmitting antenna and the receiving antenna according to the correlation coefficient calculated.

2. The method according to claim 1, wherein the mobile terminal has m antennas, m being a positive integer greater than 1, and the m antennas are sequentially taken as the transmitting antenna one by one to perform the transmitting a first signal through a transmitting antenna;
the receiving antenna is the antenna except the transmitting antenna in the m antennas.

3. The method according to claim 2, wherein the calculating a correlation coefficient between the transmitting antenna and the receiving antenna according to the first signal and the second signal comprises:
acquiring parameter information of the first signal and the second signal received by each receiving antenna;
calculating the correlation coefficient between the transmitting antenna and each receiving antenna according to the parameter information.

4. The method according to claim 3, wherein the parameter information comprises at least one of:
a signal amplitude, a signal phase.

5. The method according to claim 3, wherein the calculating a correlation coefficient between the transmitting antenna and the receiving antenna according to the first signal and the second signal further comprises:
obtaining an array of correlation coefficients between the m antennas according to the correlation coefficient between each transmitting antenna and each corresponding receiving antenna during each antenna serving as the transmitting antenna.

6. The method according to any one of claims 1 to 5, wherein the adjusting operation states of the transmitting antenna and the receiving antenna according to the correlation coefficient calculated comprises:
adjusting the operation states of the transmitting antenna and the receiving antenna through a tuning circuit;
wherein the tuning circuit adjusts at least one of:
a length of any antenna, a resistance or capacitance, or antenna matching.

7. The method according to any one of claims 1 to 5, wherein the adjusting operation states of the transmitting antenna and the receiving antenna according to the correlation coefficient calculated comprises:
adjusting the correlation coefficient between the transmitting antenna and the receiving antenna through a tuning circuit to enable the correlation coefficient subjected to the adjusting to be lower than the correlation coefficient before the adjusting.

8. The method according to any one of claims 1 to 5, wherein the adjusting operation states of the transmitting antenna and the receiving antenna according to the correlation coefficient calculated comprises:
adjusting the correlation coefficient between the transmitting antenna and the receiving antenna through a tuning circuit to enable a data throughput rate to be greater.

9. An electronic device, comprising:
at least one processor;
a memory having at least one program stored thereon, the at least one program, executed by the at least one processor, causes the at least one processor to implement the antenna decoupling method of any of claims 1 to 8;
at least one I/O interface connected between the processor and the memory and configured to enable information interaction between the processor and the memory.

10. A computer-readable storage medium having a computer program stored thereon, the computer program, executed by the processor, causes the processor to implement the antenna decoupling method of any of claims 1 to 8.
